# DEMANDE DE BREVET EUROPEEN

(11) **EP 1 000 693 A1**
(43) Date de publication de la demande: **17.05.2000**
(21) Numéro de dépôt: 99420220.8
(22) Date de dépôt: 04.11.1999
(51) Int. Cl.: B23D 51/12

(54) **Monture de scie à main équipée d'un dispositif de mise en tension de la lame**

(30) Priorité: 04.11.1998 FR 9814045
(71) Demandeur: Etablissements Seloron - Outillage Selor(S.a.r.l.), 42000 Saint Etienne (FR)
(72) Inventeur: Seloron, Hugues, 42100 Saint Etienne (FR)
(74) Mandataire: Thivillier, Patrick

(57) **Abrégé**

Monture de scie à main équipée d'un dispositif de mise en tension de la lame de scie sous forme d'une tige (4) montée avec capacité de déplacement en translation guidée à l'une des extrémités (2a) au moins de la monture, l'une des extrémités de la tige présentant des agencements d'accouplement (5) temporaire de la lame (3), l'autre extrémité de la tige (4) coopérant avec des moyens du dispositif de mise en tension actionnables seulement dans le plan de ladite monture, ces moyens étant constitués par un fourreau (6) monté librement en translation, en bout de la tige (4), en étant indexé en rotation par rapport a une partie de la monture (2b), ledit fourreau (6) étant accouplé a un levier profilé (7) de mise en tension, tandis qu'un écrou (8) est vissé en bout d'une portée filetée de la tige (4), en appui contre ledit fourreau, pour assurer, sous en effet de visage, le déplacement de la tige (4). Le levier (7) est monté à libre articulation dans une chape (6a) que présente le fourreau (6).

## Description

L'invention se rattache au secteur technique des outils à main.

D'une manière parfaitement connue, une scie à main comprend une monture dont l'une des extrémités constitue, directement, ou d'une manière rapportée, une poignée de préhension. La lame de scie en tant que telle est montée en tension entre la poignée et une partie opposée de la monture. Généralement, l'une des extrémités de la lame coopère avec un point fixe d'accouplement tandis que son autre extrémité coopère avec un dispositif de mise en tension.

Pour assurer l'accouplement en tant que tel de la lame, chacune de ses extrémités sont percées, de sorte que les trous correspondant sont engagés sur des ergots que présentent des éléments solidaires en position fixe ou mobile de la poignée ou de la monture.

Différents dispositifs de mise en tension ont été proposés. Plus particulièrement, l'invention concerne un dispositif de mise en tension du type de celui décrit dans le brevet FR 2.624.780, dont le demandeur de la présente est également le titulaire.

Le dispositif de mise en tension divulgué dans ce brevet, comprend un levier agencé avec une forme en came susceptible de venir en contre-appui puis basculement sur une partie de la monture. Le levier est associé, au niveau de sa partie inférieure, avec un organe de retenue et de mise en tension de la lame, et de blocage dans cette position. Ce dispositif donne satisfaction dans son ensemble, mais n'est pas conçu pour être intégré au niveau de la monture, notamment au niveau de sa poignée. En effet, compte tenu des caractéristiques de ce dispositif, il est nécessaire pour assurer la mise en tension et le blocage en position de la lame, de régler préalablement la position longitudinale du levier. Pour assurer le réglage, l'organe de retenue recevant le levier, est fixé sur une portée filetée. Le réglage en translation s'effectue donc en vissant ou en dévissant l'organe de retenue, sous l'effet d'un entraînement en rotation du levier. Il est donc nécessaire de ménager un espace entièrement libre autour du levier pour lui permettre un débattement circulaire nuisant ainsi grandement à son intégration par rapport à une partie de l'ensemble de la monture.

On peut citer également le brevet US 3.636.997 qui décrit une monture de scie qui intègre, au niveau de sa poignée de préhension, un levier basculant de mise en tension. Le levier est relié à articulation à un crochet profilé lui-même articulé à un bloc coulissant où est accouplée l'une des extrémités de la lame. Cette solution ne permet pas de régler facilement la tension de la lame, en fonction notamment des écarts dimensionnels de la monture et/ou de la lame ou tout simplement du travail de sciage que l'on veut effectuer.

L'invention s'est fixée pour but de remédier à ces inconvénients, de manière simple, sûre, efficace et rationnelle.

Le problème que se propose de résoudre l'invention est de supprimer, dans une monture de scie à main du type de celle définie dans le préambule de la revendication 1, la nécessité d'entraîner circulairement le levier de mise en tension pour assurer son réglage en translation, tout en ayant pour objectif d'intégrer ledit levier dans une partie appropriée de la monture, notamment au niveau de sa poignée de préhension, et de pouvoir à volonté assurer un préréglage en translation de la lame pour obtenir, en conséquence, une tension plus ou moins importante au moyen du levier articulé.

Le problème posé est résolu par les moyens définis dans la partie caractérisante de la revendication 1.

Pour résoudre le problème posé d'assurer la mise en tension en tant que telle, le levier de mise en tension présente un talon faisant office de came en prenant appui sur une partie de la monture.

A partir de cette conception de base et dans une forme de réalisation préférée, la tige est montée à libre coulissement dans des agencements que présente une poignée solidaire de la monture. Le fourreau recevant la tige est intégré dans un logement de la poignée en y étant indexé en rotation, tandis que le levier articulé est intégré dans un autre logement de la poignée en position de mise en tension de la lame.

Sans pour autant sortir du cadre de l'invention, la tige est montée à libre coulissement dans des agencements que présente une partie de la monture, à l'opposé d'une poignée que présente une partie de la monture.

L'invention est exposée ci-après plus en détail à l'aide des figures des dessins annexés dans lesquels :

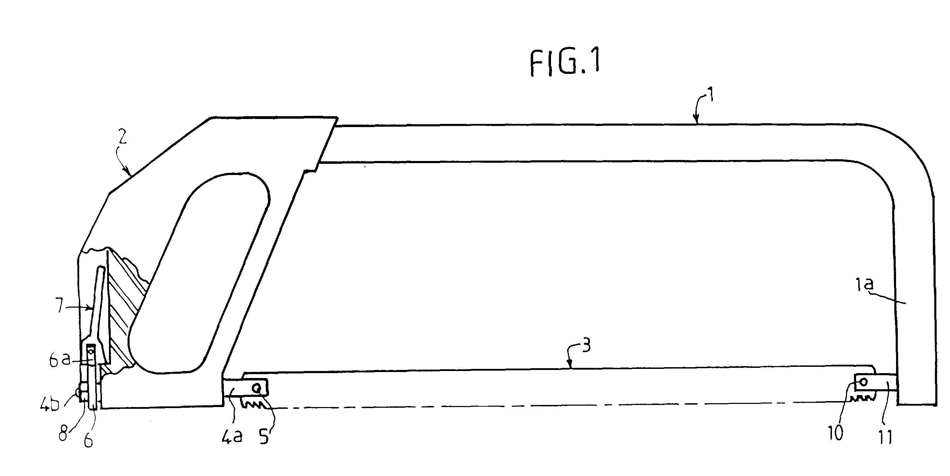

- la figure 1 est une vue de face de la monture de scie équipée du dispositif de mise en tension selon l'invention

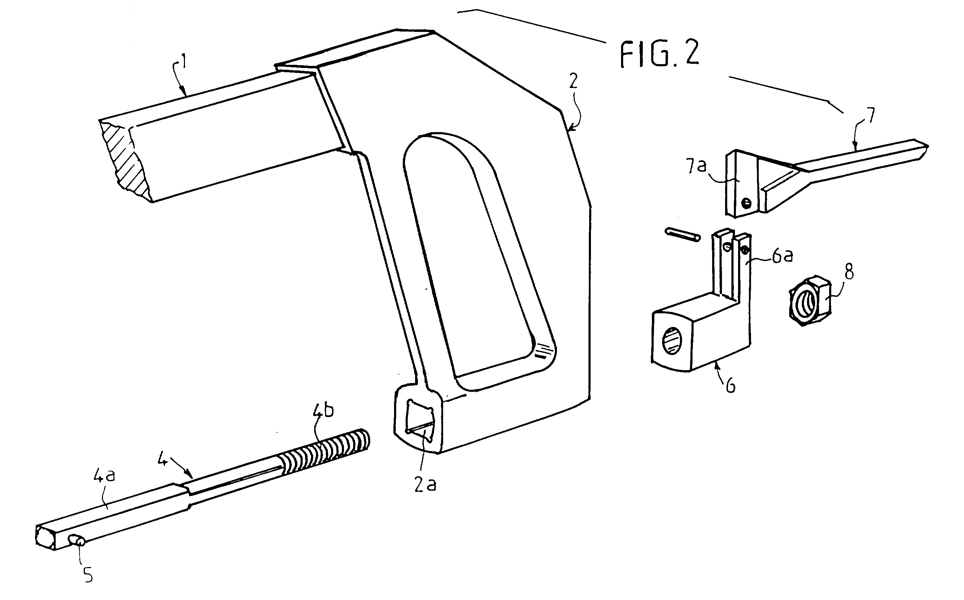

- la figure 2 est une vue partielle en perspective, avant montage, montrant les principaux éléments du dispositif de mise en tension
- les figures 3, 4 et 5 sont des vues partielles et en coupe longitudinale montrant les principales phases de prétension, de mise en tension et de blocage de la lame
- la figure 6 est une vue de profil de la monture au niveau de la poignée après rabattement du levier de mise en tension.
- la figure 7 montre un exemple d'accouplement de l'autre extrémité de la lame, à l'opposé du dispositif de mise en tension.

Selon la forme de réalisation illustrée, la monture de scie présente un tube coudé (1), notamment de section méplate, dont l'une des extrémités est solidaire directement, ou d'une manière rapportée, d'une poignée de préhension (2). Entre la base, du côté intérieur de la poignée, et le côté interne de l'extrémité libre coudée (1a) de l'ossature (1), est montée la lame de scie (3), en tant que telle. Cette monture de scie à main telle que décrite et illustrée, est donnée à titre d'exemple indicatif nullement limitatif. L'ossature (1) et la poignée (2) peuvent être réalisées selon différents matériaux et peuvent présenter d'autres formes géométriques et agencements.

Selon une autre caractéristique à la base de l'invention, la monture de scie, notamment au niveau de la poignée (2), est équipée d'un dispositif de mise en tension de la lame (3). Ce dispositif de mise en tension de la lame (3) comprend une tige (4) montée à libre coulissement avec capacité de guidage en translation, et d'indexation en rotation dans un agencement (2a) formé à la base de la poignée (2). L'une des extrémités (4a) de la tige, située, après engagement dans la poignée (2), en débordement du côté interne de cette dernière, présente une section transversale polygonale et notamment carrée. L'une des faces de cette section présente un ergot transversal (5) pour l'accrochage de la lame (3) en combinaison avec un trou débouchant que présente ladite lame.

L'autre extrémité de la tige (4) située à l'opposé et du côté externe de la poignée (2), présente une portée filetée (4b). Cette portée (4b) reçoit, à coulissement, un fourreau (6) dont l'une des extrémités constitue une chape (6a) pour recevoir, à libre articulation, un levier de mise en tension (7). Le fourreau (6), de section transversale polygonale, est monté à l'intérieur d'un logement (2b) de section complémentaire formé à la base de la poignée de préhension (2) afin d'assurer l'indexation en rotation et le guidage linéaire dudit fourreau (6).

L'extrémité libre de la portée filetée (4b) reçoit un écrou (8) en butée contre la face arrière du fourreau support (6). Comme il sera indiqué dans la suite de la description, cet écrou (8) a pour fonction d'assurer, d'une manière importante, le déplacement de la tige (4) d'accouplement de la lame (3).

L'une des extrémités du levier (7) présente un talon (7a) faisant office de came. Ce talon (7a) est apte à prendre appui, au fur et à mesure du rabattement angulaire (F) du levier (7) en direction de la poignée (2), sur une plaque (9) que présente, directement ou d'une manière rapportée, la section interne de la branche de préhension arrière (2c) de la poignée (2). Là encore, comme il sera indiqué dans la suite de la description, après avoir assuré la prétension de la lame (3) au moyen de l'écrou (8), le levier (7) a pour fonction d'assurer la mise en tension souhaitée de la lame et son blocage dans cette position.

L'autre extrémité de la lame, à l'opposé de son accrochage avec l'ergot (5) de la tige (4), est accouplée à un point fixe de la monture, notamment de l'extrémité libre du bras coudé (1a) de l'ossature (1). Par exemple, la lame (3) est accouplée à un ergot (10) que présente, transversalement, un carré (11) solidaire de l'extrémité libre (1a) de l'ossature (1).

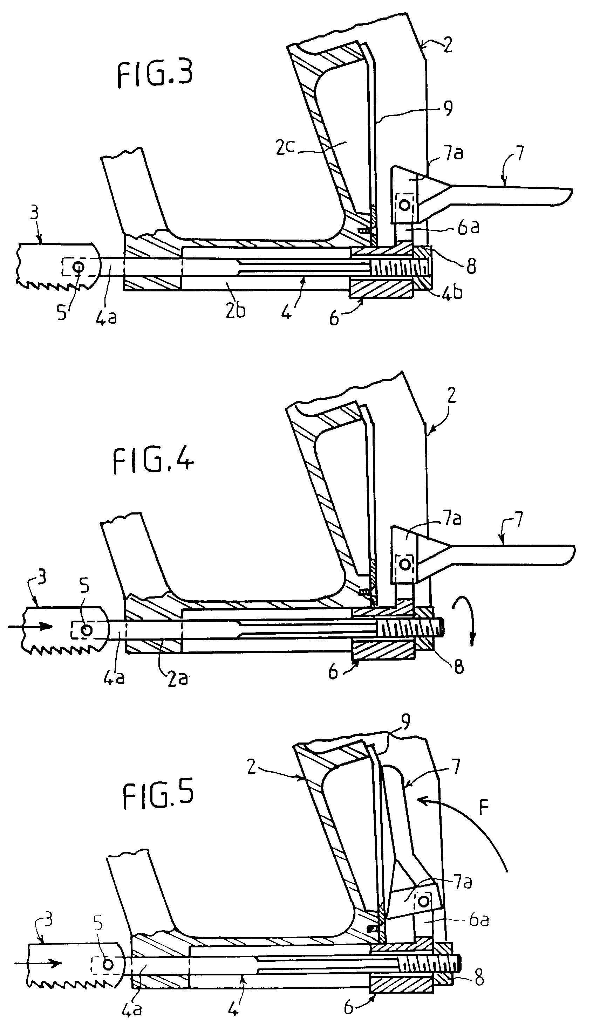

On se réfère plus particulièrement aux figures 3, 4 et 5, montrant le principe de fonctionnement de mise en tension de la lame de scie, la lame (3) étant accrochée à chacune de ses extrémités sur les ergots (5 et 10).

A la figure 3, l'écrou (8) est desserré, tandis que le levier (7) est basculé , de sorte que son talon profilé (7a) échappe à la plaque d'appui (9). Dans cette position, la lame (3) n'est soumise à aucune tension.

Lorsque l'on procède au serrage manuel de l'écrou (8), en appui contre le fourreau (6), on provoque, d'une manière concomitante, le déplacement en translation de la tige (4), à l'intérieur des agencements (2a et 2b) de la poignée de préhension (2), et dans l'alésage du fourreau (6) (figure 4). Le déplacement de la tige (4) a pour effet de modifier, d'une manière concomitante, le positionnement du levier (7) pour régler en conséquence la tension de la lame (3) par rapport au point fixe d'accouplement (10).

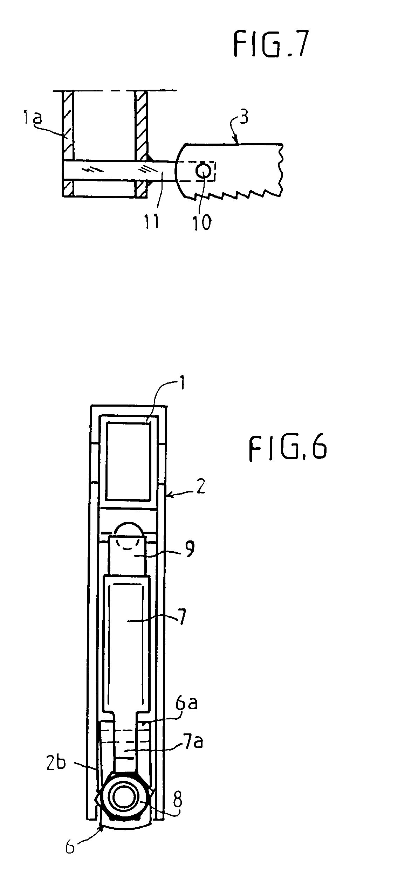

Lorsque l'on rabat angulairement le levier (7) en direction de la poignée de préhension, le talon (7a) de ce dernier vient en appui contre la plaque (9), afin de provoquer, par son profil en came, et au fur et à mesure de son rabattement, le déplacement limité en translation de la tige (4), afin de provoquer la mise en tension définitive de la lame (3) (figure 5). Dans cette position rabattue du levier (7), on obtient également le blocage en position de tension de la lame (3), étant donné que l'on a dépassé le point mort de la came.

A noter que la poignée (2), notamment sa branche (2a), et le levier (7), sont convenablement profilés pour permettre, en position rabattue du levier (7), son intégration dans la branche (2a) de la poignée (2).

Bien évidemment, sans pour cela sortir du cadre de l'invention, on n'exclut pas de monter le dispositif de mise en tension de la lame tel que décrit, de l'autre côté de la monture, c'est-à-dire du côté du bras coudé (1a) de l'ossature (1). Dans ce cas, la tige (4) est montée à libre coulissement dans l'épaisseur du bras coudé (1a), ainsi que dans le fourreau (6) assujetti au levier de tension (7). Dans ce cas, le point fixe d'accouplement de la lame (3) est situé du côté de la poignée de préhension (2).

Les avantages ressortent bien de la description. On souligne et on rappelle la possibilité d'intégrer le levier de mise en tension de la lame dans une partie de la poignée de préhension. On admet qu'il n'est pas nécessaire d'agir en rotation sur ce levier pour assurer une prétension de la lame. Enfin, d'une manière importante, l'écrou permet, à volonté, de déplacer la tige où est accouplée la lame pour modifier en conséquence la tension exercée sur la lame au moyen du levier articulé.

## Revendications

1. Monture de scie à main équipée d'un dispositif de mise en tension de la lame sous forme d'une tige (4) montée avec capacité de déplacement en translation guidée à l'une des extrémités au moins de la monture, l'une des extrémités de la tige présentant des agencements d'accouplement temporaire de la lame (3), l'autre extrémité de la tige (4) coopérant avec des moyens du dispositif de mise en tension actionnables seulement dans le plan de ladite monture, **caractérisé en ce que** les moyens sont constitués par un fourreau (6) monté librement en translation, en bout de la tige (4), en étant indexé en rotation par rapport à une partie de la monture, ledit fourreau (6) étant accouplé à un levier profilé (7) de mise en tension, tandis qu'un écrou est vissé en bout d'une portée filetée de la tige, en appui contre ledit fourreau, pour assurer, sous un effet de vissage, le déplacement de la tige (4).

2. Monture selon la revendication 1, caractérisé en ce que le levier de mise en tension (7) présente un talon (7a) faisant office de came en prenant appui sur une partie (9) de la monture.

3. Monture selon la revendication 1, caractérisé en ce que le levier est monté à libre articulation dans une chape que présente le fourreau (6).

4. Monture selon la revendication 1, caractérisé en ce que la tige (4) est montée à libre coulissement dans des agencements que présente une poignée (2) solidaire de la monture.

5. Monture selon la revendication 4, caractérisé en ce que le fourreau recevant la tige (4) est intégré dans un logement de la poignée en y étant indexé en rotation, tandis que le levier articulé est intégré dans un autre logement de la poignée en position de mise en tension de la lame.

6. Monture selon la revendication 1, caractérisé en ce que la tige est montée à libre coulissement dans des agencements que présente une partie de la monture, à l'opposé d'une poignée que présente une partie de la monture.
